(19) Europäisches Patentamt

European Patent Office

Office européen des brevets

(11) EP 0 791 268 B1

## (12) EUROPEAN PATENT SPECIFICATION

(45) Date of publication and mention
of the grant of the patent:
**05.07.2000 Bulletin 2000/27**

(21) Application number: **94928896.3**

(22) Date of filing: **16.09.1994**

(51) Int. Cl.[7]: **H04N 1/60**

(86) International application number:
**PCT/EP94/03365**

(87) International publication number:
**WO 96/08915 (21.03.1996 Gazette 1996/13)**

(54) **HSL NEIGHBORHOODS IN CMY COLOR SPACE**

HSL UMGEBUNG IN EINEM CMY FARBRAUM

ENVIRONNEMENTS DE TEINTE, SATURATION ET LUMINANCE (HSL) DANS UN ESPACE DES
COULEURS CMJ

(84) Designated Contracting States:
**DE FR GB IT**

(43) Date of publication of application:
**27.08.1997 Bulletin 1997/35**

(73) Proprietor:
**Heidelberger Druckmaschinen
Aktiengesellschaft
69115 Heidelberg (DE)**

(72) Inventor: **DICHTER, Wilhelm
Tewksbury, MA 01876 (US)**

(56) References cited:
**EP-A- 0 502 369        GB-A- 2 198 008**

• **IBM TECHNICAL DISCLOSURE BULLETIN, vol.
36,no. 7, May 1993 pages 353-358, 'Automated
Color Balance for and Inter-Integrated Circuit
Display'**
• **Farbwiedergabe in den Medien - Fernsehen Film
Druck, H. Lang, Muster-Schmidt Verlag,
Göttingen, DE, 1995, first page of chapter 7.17**
• **Grundlagen der Reproduktionstechnik, H.
Willkomm, Polygraph Verlag GmbH, Frankfurt
am Main, DE, 1973, p.114-117**

## Description

### RELATED APPLICATION

The present application is related to our copending US patent application, having the US Serial No. 08/302,247, titled "HSL CORRECTIONS IN CMY COLOR SPACE".

### BACKGROUND OF THE INVENTION

The present invention relates to color manipulation for digital image processing in the prepress industry. An HSL (Hue, Saturation, Luminance) weighted mask can be used for any color manipulation, e.g. weighted color corrections, automatic silhouetting etc. Changes are executed only in the region of the mask. The results correspond to the human perception of color changes.
As a result of attempts to introduce more intuitive color manipulation, a uniform HSL (or equivalent) neighborhood is created. This requires color space translations and does not allow weighted color change distributions. The data inside the neighborhood is selected for further changes and the data outside of it is rejected.

In this approach it is difficult to: 1) accomplish quality transitions between color spaces; 2) meet precision requirements; 3) achieve interactive performance; and 4) avoid the undesirable effects of binary weighting.

In the European patent application EP 0 502 369 a cone-shaped hue space of a predetermined hue range (skin colors) is defined symmetrically about a central axis in a CMY color space which is directed from an image low-density region to an image high density region. Image colors identified by the user which are inside that hue space are modified, colors outside that hue space are not modified. The color modifications are directly performed on the CMY components of the selected colors. The skin color hue space is predetermined based on statistical information from typical images. The position, size, and shape of the hue space is not changed based on user input.

### SUMMARY OF THE INVENTION

It is an object of the invention to accomplish quality transitions between color spaces and to provide hue, saturation, and luminance neighborhoods of a selected CMY color directly from the original CMY image and CMY colors.

According to a method of the invention, a three dimensional neighborhood is defined in a CMY color space. The CMY color space has a gray line therein. The gray line is an absence of color but provides steadily increasing luminance therealong. The neighborhood is defined by defining boundaries thereof based on at least one of H, S, L correction ranges with respect to the gray line.

Stated another way, the invention involves the following. The hue, saturation and luminance neighborhoods of a selected CMY color are determined directly from the original CMY image and CMY colors with respect to the gray line, rather than the color cube diagonal. The gray line extends nonlinearly throughout the CMY color space. A weighted mask representing the HSL distance from the selected color, within these combined neighborhoods, is then created.

The HSL weighted mask is an arbitrary function of the HSL distance from the selected color. The mask is created within the combined hue, saturation and luminance neighborhoods in one step without color space translations. All calculations are based on the original image and are performed on a pixel by pixel basis.

Any color manipulation can be executed within the HSL weighted mask. With the invention when a neighborhood is defined, in one preferable weighting scheme, the amount of change tapers oft as the outer boundaries of the geometrical neighborhood are approached. This results in a smoothing of the change so that the neighborhood blends in with the overall image without abrupt changes at the outer boundaries of the neighborhood.

### BRIEF DESCRIPTION OF THE DRAWINGS

Figure 1    is an illustration of hue change in a CMY color space;
Figure 2    is an illustration of saturation change in a CMY color space;
Figure 3    is an illustration of luminance change in a CMY color space;
Figure 4    is a three dimensional geometric illustration of the hue neighborhood in a CMY color space according to the invention;
Figure 5    is a three dimensional geometric illustration of a saturation neighborhood in a CMY color space according to the invention; and
Figure 6    is a three dimensional geometric illustration of a luminance neighborhood in a CMY color space according to the invention.

DESCRIPTION OF THE PREFERRED EMBODIMENTS

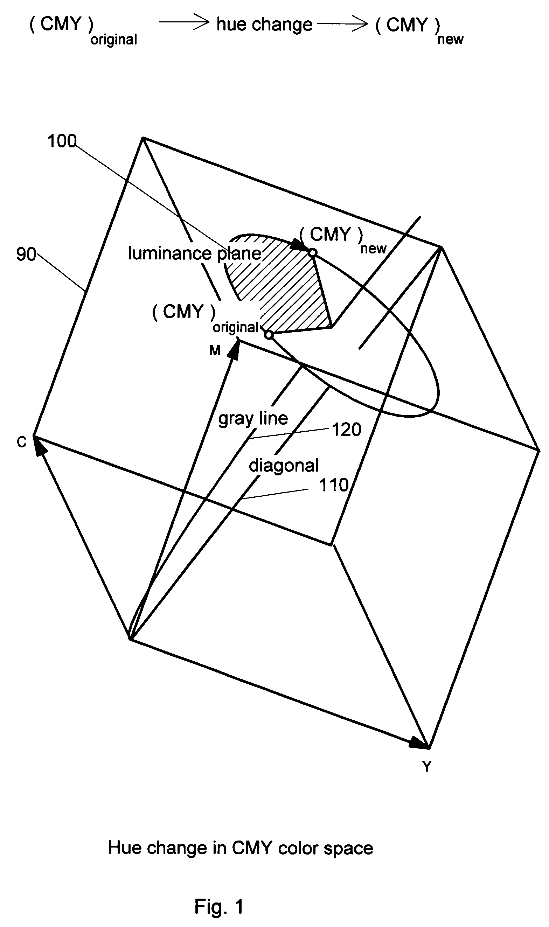

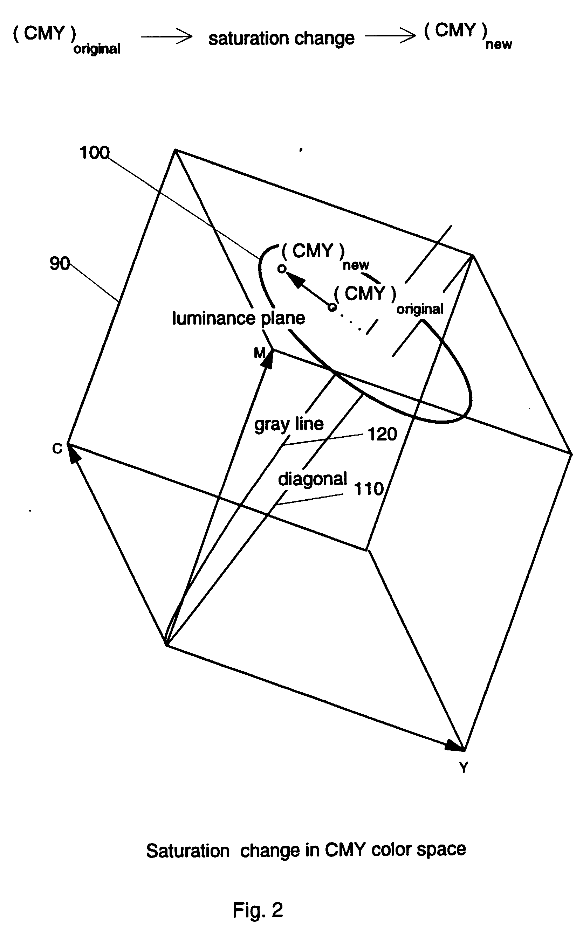

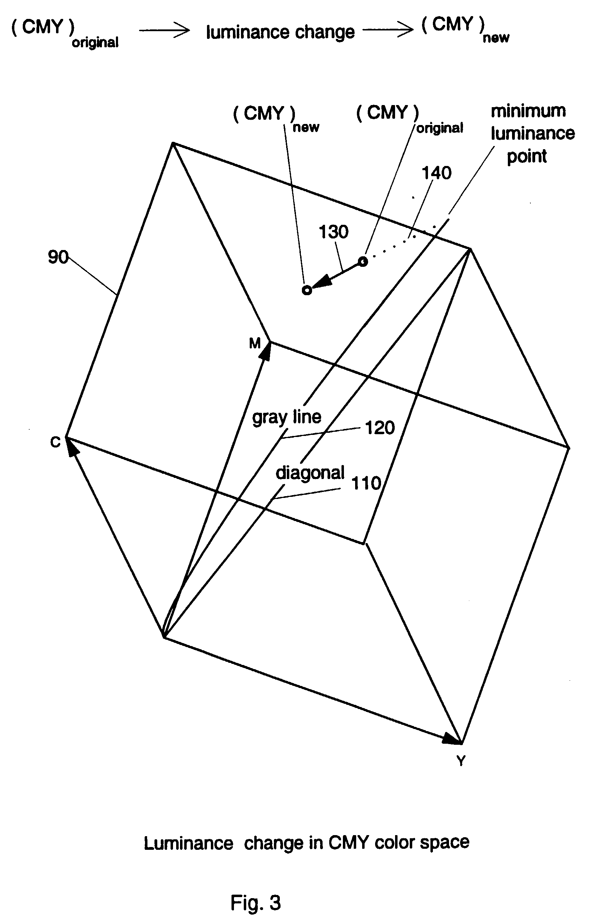

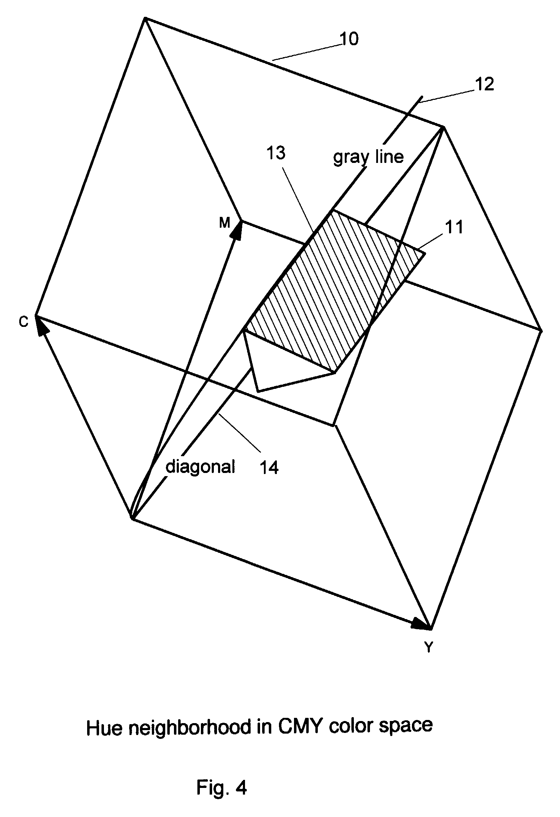

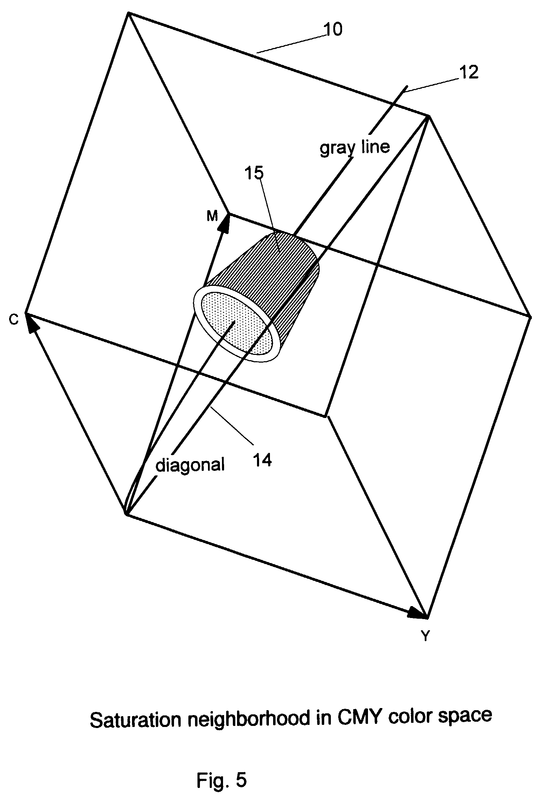

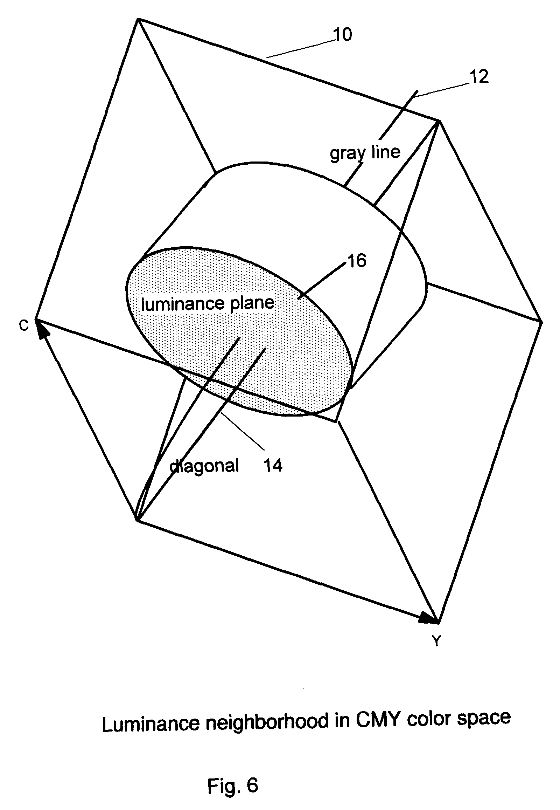

As mentioned previously, the present application is related to my copending application titled "HSL CORRECTIONS IN CMY COLOR SPACE". Figure 4 of that earlier application corresponding to Figure 1 herein shows how a hue change is effected in a CMY color space 90 based on the gray line 120 (a gray line is the line which has the absence of color passing through the color space but does represent increasing luminance changes). Figure 5 in that earlier application, corresponding to Figure 2 in the present case shows saturation change with respect to the gray line 120, and Figure 6 in the earlier case corresponding to Figure 3 herein shows luminance change with respect to the gray line 120. The figures 4, 5, and 6 and description which follow here are an extension of that earlier case in which three dimensional patterns evolve from the planar geometries of Figures 1, 2, and 3 herein. These geometries are hereafter known as HSL neighborhoods. Figure 4 in the present case shows a hue neighborhood based on the hue wedge shown in the luminance plane 100 as an arc segment in Figure 1. The luminance plane is perpendicular to the diagonal 110. Figure 5 is a saturation neighborhood based on the radial saturation change shown in the luminance plane 100 in Figure 2. Figure 6 is a luminance neighborhood based on the luminance line 130 shown in Figure 3 emanating from the end point 140 of the gray line 120.

Steps of the process according to the invention will now be described in greater detail. The determination of HSL neighborhoods from CMY data can be determined as follows.

HUE NEIGHBORHOOD

A hue neighborhood is determined directly from the CMY colors and is described in a CMY color space 10 as a nonlinear wedge 11 with the gray line 12 as its edge 13, as shown in Figure 4. A diagonal is also shown at 14. The input data consists of an image as an array of pixels, with the (CMY)original color components specified for each pixel. For every pixel of the image, the following three steps are carried out:

1. The intersection of the color cube diagonal with a luminance plane perpendicular to it is calculated as:

$$D = 1/3 \left( Y_{original} + M_{original} + C_{original} \right)$$

2. The cyan component of the gray line intersection with a luminance plane is calculated as the empirically established function of the intersection of the color cube diagonal with the same plane:

$$C_{gray} = f_C (D)$$

3. The hue is calculated as:

$$HUE = arctg \frac{Y_{original} - M_{original}}{\sqrt{3}(C_{gray} - C_{original})}$$

**SATURATION NEIGHBORHOOD**

As shown in Figure 5, a saturation neighborhood is determined directly from the CMY colors and is described in the CMY color space 10 as a nonlinear hollow cone 15 surrounding the gray line 12. The input data consists of an image as an array of pixels, with the (CMY)$_{original}$ color components specified for each pixel.

For every pixel of the image, the following four steps are carried out:

1. The intersection of the color cube diagonal with a luminance plane perpendicular to it is calculated as:

$$D = 1/3(Y_{original} + M_{original} + C_{original})$$

2. The luminance, measured along the gray line from the point of minimum luminance to a given color luminance plane, is calculated as the empirically established function of the color cube diagonal intersection with the same plane:

$$LUM = f_{lum}(D)$$

3. The intersection of the gray line with a luminance plane is calculated as the empirically established function of the color cube diagonal intersection with the same plane:

$$Y_{gray} = f_y(D), M_{gray} = f_M(D) \text{ and } C_{gray} = f_c(D)$$

4. The saturation is calculated as:

$$SAT = artg \frac{\sqrt{(Y_{original} - Y_{gray})^2 + (M_{original} - M_{gray})^2 + (C_{original} - C_{gray})^2}}{LUM}$$

## LUMINANCE NEIGHBORHOOD

As shown in Figure 6, a luminance neighborhood is determined directly from the CMY colors and is described in the CMY color space 10 as a group of contiguous planes 16, perpendicular to the color cube diagonal 14. The HSL weighted mask is an arbitrary function of the HSL distance from the selected color.

The input data consists of an image as an array of pixels, with the $(CMY)_{original}$ color components specified for each pixel.

1. The intersection of the color cube diagonal with a luminance plane perpendicular to it is calculated as:

$$D = 1/3 (Y_{original} + M_{original} + C_{original})$$

2. The luminance, measured along the gray line from the point of minimum luminance to a given color luminance plane, is calculated as the empirically established function of the color cube diagonal intersection with the same plane:

$$LUM = f_{lum}(D)$$

## HSL NEIGHBORHOOD WEIGHTED MASK

The input data consists of an array of pixels, with the HUE, SAT, and LUM color components being specified for each pixel. The HSL weighted mask is the following arbitrary function:

$$0 \leq d = f[HUE, SAT, LUM] \leq 100\%$$

## Claims

1. A method for color manipulation in digital image processing in the prepress industry avoiding abrupt changes in the manipulated image wherein all calculations which are necessary for the color manipulation are based on the original image and are performed on a pixel by pixel basis in a three-dimensional CMY color space,

   providing a CMY color space having a gray line extending non-linearely through the CMY color space,

   defining a three-dimensional neighborhood in the CMY color space directly from the original CMY image and from CMY colors as a hue neighborhood by defining boundaries of the neighborhood based on a least one H, S, and L correction range with respect to a line, characterised in that

   the step of defining a three-dimensional neighborhood in the CMY color space is performed from CMY colors as a hue, saturation and luminance neighborhood of a selected CMY color, and in that

   the boundaries of the neighborhood are defined based on at least one H, S, and L correction range with respect to the gray line rather than with respect to the diagonal of the color space.

2. A method according to claim 1 wherein a hue neighborhood is defined by a non-linear curved wedge having the gray line as an edge thereof so that the wedge follows the gray line.

3. A method according to claim 1 wherein for defining a saturation neighborhood, a non-linear curved hollow cone which surrounds and follows the gray line with the gray line passing substantially through its center is provided.

4. A method according to claim 1 wherein a luminance neighborhood is defined as a group of contiguous luminance planes forming a curved cylinder which follows along its center the gray line.

5. A method according to claim 1 wherein a weighting is assigned within the three-dimensional neighborhood based on an HSL position of a color point within the neighborhood.

6. A method according to claim 5 wherein the weighting smoothly decreases from an interior of the neighborhood to the outer boundaries thereof to provide a smooth transition from the neighborhood to the surrounding color space.

7. A method according to claim 5 wherein for the entire color image in the color space, checking each pixel thereof to determine whether it is inside or outside the three dimensional neighborhood, and if it is within the neighborhood, checking its position to determine appropriate weighting.

8. A method according to claim 1 wherein when defining the neighborhood by defining boundaries based on at least one of the H, S, and L correction ranges, defining a movement using the gray line as a point of reference.

9. A method according to claim 8 wherein said movement for hue is an arc segment of a circle lying in a luminance plane and having the gray line as its center as described in the CMY color space.

10. A method according to claim 8 wherein said movement for saturation is a movement along a radius of a circle lying in a luminance plane as described in said CMY color space.

11. A method according to claim 8 wherein said movement for luminance comprises a movement along the gray line as described in said CMY color space.

**Patentansprüche**

1. Verfahren zur Farbmanipulation bei der digitalen Bildverarbeitung in der Druckvorstufen-Industrie, das abrupte Veränderungen in dem manipulierten Bild vermeidet, und wobei alle Berechnungen, die für die Farbmanipulation notwendig sind, von dem Originalbild ausgehen und Bildpunkt für Bildpunkt in einem dreidimensionalen CMY Farbraum durchgeführt werden,
wobei ein CMY Farbraum vorhanden ist, der eine Graulinie hat, die sich nichtlinear durch den CMY Farbraum erstreckt, und
wobei eine dreidimensionale Nachbarschaft in dem CMY Farbraum direkt aufgrund des CMY Originalbildes und der CMY Farben als eine Farbton-Nachbarschaft definiert wird, indem Begrenzungen der Nachbarschaft auf Basis wenigstens eines H, S und L Korrekturbereichs in Bezug auf eine Linie definiert werden, dadurch gekennzeichnet, daß

der Schritt der Definition einer dreidimensionalen Nachbarschaft in dem CMY Farbraum ausgehend von CMY Farben als eine Farbton-, Sättigungs- und Luminanz-Nachbarschaft einer ausgewählten CMY Farbe durchgeführt wird, und daß

die Begrenzungen der Nachbarschaft auf Basis wenigstens eines H, S und L Korrekturbereichs in Bezug auf die Graulinie statt in Bezug auf die Diagonale des Farbraums definiert werden.

2. Verfahren nach Anspruch 1, wobei eine Farbton-Nachbarschaft durch einen nichtlinear gebogenen Keil definiert wird, der die Graulinie als eine seiner Kanten hat, so daß der Keil der Graulinie folgt.

3. Verfahren nach Anspruch 1, wobei zur Definition einer Sättigungs-Nachbarschaft ein nichtlinear gebogener hohler Kegel vorgesehen ist, der die Graulinie umgibt und der Graulinie folgt, wobei die Graulinie im wesentlichen durch sein Zentrum verläuft.

4. Verfahren nach Anspruch 1, wobei eine Luminanz-Nachbarschaft als eine Gruppe fortlaufender Luminanzebenen definiert wird, die einen gebogenen Zylinder bilden, der entlang seines Zentrums der Graulinle folgt.

5. Verfahren nach Anspruch 1, wobei innerhalb der dreidimensionalen Nachbarschaft eine Gewichtung auf der Basis der HSL Position eines Farbpunktes innerhalb der Nachbarschaft vorgenommen wird.

6. Verfahren nach Anspruch 5, wobei die Gewichtung kontinuierlich vom Inneren der Nachbarschaft zu ihren äußeren Begrenzungen hin abnimmt, um einen kontinuierlichen Übergang von der Nachbarschaft zu dem umgebenden Farbraum zu schaffen.

7. Verfahren nach Anspruch 5, wobei für das gesamte Farbbild in dem Farbraum jeder Bildpunkt geprüft wird, um zu bestimmen, ob er innerhalb oder außerhalb der dreidimensionalen Nachbarschaft liegt, und wenn er innerhalb der Nachbarschaft liegt, um seine Position zur Bestimmung der geeigneten Gewichtung festzustellen.

8. Verfahren nach Anspruch 1, wobei, wenn die Nachbarschaft durch Begrenzungen auf Basis wenigstens eines der H, S und L Korrekturbereiche definiert wird, ein Veränderungspfad mit Bezug auf die Graulinie definiert wird.

9. Verfahren nach Anspruch 8, wobei der Veränderungspfad für den Farbton ein Bogensegment eines Kreises ist, der in einer Luminanzebene liegt und die Graulinie als Mittelpunkt hat, wie in dem CMY Farbraum beschrieben.

10. Verfahren nach Anspruch 8, wobei der Veränderungspfad für die Sättigung ein Veränderungspfad entlang des Radius eines Kreises ist, der in einer Luminanzebene liegt, wie in dem CMY Farbraum beschrieben.

11. Verfahren nach Anspruch 8, wobei der Veränderungspfad für die Luminanz einen Veränderungspfad entlang der Grauline umfaßt, wie in dem CMY Farbraum beschrieben.

**Revendications**

1. Procédé de manipulation de couleurs dans un traitement d'image numérique dans l'industrie de la pré-impression, pour éviter des changements brusques de l'image manipulée, dans lequel tous les calculs nécessaires à la manipulation des couleurs sont fondés sur l'image originale et sont effectués sur une base pixel par pixel dans un espace de couleurs CMY à trois dimensions, fournissant un espace de couleurs CMY comportant une ligne de gris s'étendant non linéairement à travers l'espace de couleurs CMY, et définissant un voisinage à trois dimensions dans l'espace de couleurs CMY directement à partir de l'image CMY originale et à partir des couleurs CMY, sous la forme d'un voisinage sur la base d'au moins une portée de correction de T (Teinte), S (Saturation) et L (Luminance) par rapport à une ligne,
caractérisé en ce que
l'étape de définition d'un voisinage à trois dimensions dans l'espace de couleurs CMY, est effectuée à partir des couleurs CMY sous la forme d'un voisinage de teinte, saturation et luminance d'une couleur CMY sélectionnée, et les limites du voisinage sont définies sur la base d'au moins une portée de correction de T, S et L par rapport à la ligne de gris plutôt que par rapport à la diagonale de l'espace de couleurs.

2. Procédé selon la revendication 1,
dans lequel
un voisinage de teinte est défini par un coin courbe non linéaire ayant la ligne de gris formant un bord de celui-ci, de façon que le coin suive la ligne de gris.

3. Procédé selon la revendication 1,
dans lequel
pour définir un voisinage de saturation, on utilise un cône creux courbe non linéaire qui entoure et suit la ligne de gris, cette ligne de gris passant exactement par son centre.

4. Procédé selon la revendication 1,
dans lequel
un voisinage de luminance est défini comme un groupe de plans de luminance contigus formant un cylindre qui suit la ligne de gris le long de son centre.

5. Procédé selon la revendication 1,
dans lequel
une pondération est affectée dans le voisinage à trois dimensions sur la base d'une position TSL d'un point couleur à l'intérieur du voisinage.

**6.** Procédé selon la revendication 5,
dans lequel
la pondération diminue doucement à l'intérieur du voisinage vers les limites extérieures de celui-ci, pour tonner une transition douce du voisinage vers l'espace de couleurs environnant.

**7.** Procédé selon la revendication 5,
dans lequel
pour toute l'image en couleurs de l'espace de couleurs, on vérifie chaque pixel de celle-ci pour déterminer si il est à l'intérieur ou à l'extérieur du voisinage à trois dimensions et, si il est à l'intérieur du voisinage, on vérifie sa position pour déterminer la pondération appropriée.

**8.** Procédé selon la revendication 1,
dans lequel
lorsqu'on définit le voisinage en définissant des limites sur la base de l'une au moins des portées de correction de T, S et L, on définit un mouvement en utilisant la ligne de gris comme point de référence.

**9.** Procédé selon la revendication 8,
dans lequel
le mouvement pour la teinte est un segment d'arc de cercle se situant dans un plan de luminance et ayant la ligne de gris comme centre, tel que cela est décrit dans l'espace de couleurs CMY.

**10.** Procédé selon la revendication 8,
dans lequel
le mouvement pour la saturation est un mouvement le long du rayon d'un cercle se situant dans un plan de luminance, comme décrit dans l'espace de couleurs CMY.

**11.** Procédé selon la revendication 1,
dans lequel
le mouvement pour la luminance comprend un mouvement le long de la ligne de gris, comme décrit dans l'espace de couleurs CMY.

$( CMY )_{original} \longrightarrow$ hue change $\longrightarrow ( CMY )_{new}$

Hue change in CMY color space

Fig. 1

$( CMY )_{original}$ $\longrightarrow$ saturation change $\longrightarrow$ $( CMY )_{new}$

Saturation change in CMY color space

Fig. 2

$( CMY )_{original}$ ⟶ luminance change ⟶ $( CMY )_{new}$

Luminance change in CMY color space

Fig. 3

Hue neighborhood in CMY color space

Fig. 4

Saturation neighborhood in CMY color space

Fig. 5

Luminance neighborhood in CMY color space

Fig. 6